Europäisches Patentamt

European Patent Office    (11) Numéro de publication: **0 270 440**

Office européen des brevets                                  **B1**

(12)                    **FASCICULE DE BREVET EUROPEEN**

(45) Date de publication du fascicule du brevet: **23.01.91**    (51) Int. Cl.⁵: **G 01 D 5/24**

(21) Numéro de dépôt: **87402588.5**

(22) Date de dépôt: **17.11.87**

(54) Capteurs de position angulaire ou linéaire de haute précision à couplage capacitif.

| | |
|---|---|
| (30) Priorité: **21.11.86 FR 8616258** | (73) Titulaire: **THOMSON-CSF**<br>**51, Esplanade du Général de Gaulle**<br>**F-92800 Puteaux (FR)** |
| (43) Date de publication de la demande:<br>**08.06.88 Bulletin 88/23** | (72) Inventeur: **Girault, Jean**<br>**THOMSON-CSF SCPI 19, avenue de Messine**<br>**F-75008 Paris (FR)** |
| (45) Mention de la délivrance du brevet:<br>**23.01.91 Bulletin 91/04** | |
| (84) Etats contractants désignés:<br>**DE GB** | (74) Mandataire: **Turlèque, Clotilde et al**<br>**THOMSON-CSF SCPI**<br>**F-92045 PARIS LA DEFENSE CEDEX 67 (FR)** |
| (56) Documents cités:<br>**EP-A-0 053 091**<br>**DE-A-3 436 681**<br>**GB-A-2 009 944**<br>**GB-A-2 118 720** | |

Courier Press, Leamington Spa, England.

# EP  0 270 440  B1

**Description**

La présente invention concerne des capteurs de position à couplage capacitif et plus précisément, la réalisation de tels capteurs effectuant une mesure absolue, c'est-à-dire par rapport àune position de référence connue, et délivrant la mesure avantageusement sous formed'unsignal numérique.

Il est connu de faire des mesures de longueur ou de déplacement angulaire par des procédés capacitifs. Par exemple, pour mesurer une rotation on forme un condensateur variable avec un dispositif du type condensateur à masque constitué au moyen de deux plaques entre lesquelles on interpose un écran. La rotation de l'écran couvre plus ou moins une zone active formée par une partie de la surface d'une des plaques et il en résulte une variation de capacité quiest fonction de la rotation.

Il est connu également, pour lire des appareils de mesure dans lesquels une aiguille se déplace par exemple un compteur, d'utiliser un dispositif constitué par un élément plan fixe en matériau isolant portant d'une part, une série d'électrodes régulièrement espacées à un pas donné selon une direction de déplacement circulaire et alimentées par des tensions polyphasées pour créer un champ électrique tournant, et d'autre part, une électrode de lecture. L'aiguille de l'appareil de mesure est disposée parallèlement à l'élément plan et situé dans le trajet dudit champ tourant autour d'un axe concentrique avec l'électrode de lecture. L'aiguille produit uncouplage capacitif entre la série d'électrodes et l'électrode de lecture pour recueillir sur celle-ci une tension induite dont la phase est fonction de la position de l'aiguille par rapport à une position de référence. Un circuit de traitement avec un phasemètre permet de mesurer cette phase et donc la position de l'aiguille. Cette techniquene donne qu'une précision limitée.

Il est à remarquer que la précision de capteurs de position capacitifs dépend d'une part du pas et de la finesse des électrodes des capteurs utilisés et d'autre part de la méthode de traitement des signaux fournis par les capteurs. Les demandes de brevets britanniques 2,118,720 et 2,009,944 concernent des capteurs capacitifs correspondant sensiblement à l'état de l'art décrit ci-avant, mais la demande 2,188,720 ne propose pas de traitement des signaux et la demande 2,009,944 propose deux traitements:

un premier traitement par simple phasemètre, qui est donc moyennement précis et où les électrodes sont alimentées à l'aide d'une alimentation sinusoïdale polyphasée; une telle alimentation est assez coûteuse à réaliser et c'est pourquoi il est proposé un second traitement à partir de signaux obtenus avec un capteur dont les électrodes sont alimentées en signaux rectangulaires polyphasés; l'alimentation est moins coûteuse et ce second traitement est original du fait des signaux rectangulaires mais les résultats ne sont pas meilleurs qu'avec le premier traitement.

Le but de l'invention est de réaliser un capteur de position à couplage capacitif dérivé des techniques précitées et pouvant fournir une très grande précision et une réponse linéaire de la mesure d'un déplacement qu'il soit linéaire ou angulaire.

Suivant l'invention, il est réalisé un capteur de position angulaire ou linéaire, de haute précision, à couplage capacitif comportant:

dans un premier plan, une première série de $n$ électrodes réparties régulièrement àun pas P1 déterminé selon une direction donnée pour couvrir une plage de déplacement d'étendue $n$ P1, lesdites électrodes étant alimentées par des tensions polyphasées pour créer un champ électrique mobile selon ladite direction et parcourant périodiquement ladite plage de déplacement, et une électrode collectrice de lecture,

dans un deuxième plan, parallèle au premier plan et disposé à proximité de celui-ci, un dispositif conducteur électrique déplaçable selon ladite direction et couvrant une partie de ladite plage pour produire, par couplage capacitif avec lesdites électrodes et avec l'électrode collectrice une tension induite dans cette dernière dont la phase est une fonction linéaire de la position dudit dispositif conducteur dans la plage de déplacement,

et des circuits de traitement de la tension induite pour mesurer la phase et corrélativement la position du conducteur mobile, et dans lequel le dispositif conducteur électrique est constitué au moyen, d'une part, d'une deuxième série d'électrodes en nombre $m$ inférieur à $n$ et qui sont disposées régulièrement à un pas P2 supérieu à P1, et d'autre part, d'une électrode de couplage capacitif à l'électrode collectrice, les électrodes de la deuxième série étant connectées à cette électrode de couplage, le capteur étant caractérisé en ce que les circuits de traitement procédent par intégration périodique de la tension induite à la période de déplacement du champ, et par détermination par rapportà un instant de référence du décalage présenté par l'instant qui satisfait à la valeur moitié de l'integration, ledit instant de référence correspondant à une position donnée du dispositif conducteur dans ladite plage.

Les particularités et avantages de l'invention apparaîtront dans la description qui sont donnée à titre d'exemple, à l'aide des figures annexées qui représentent.

Fig. 1, un schéma général correspondant à une première version d'un capteur de position angulaire conforme à l'invention;

Fig. 2, une vue en coupe de la structure mécanique du capteur de position angulaire selon la figure 1;

Fig. 3, une représentation partielle linéaire des électrodes du stator et du rotor, ce dernier présentant plusieurs positions de décalage successives;

Fig. 4, des formes d'ondes relatives à des tensions d'alimentation polyphasée du stator, aux signaux induits intégrés et à des signaux porte de commande correspondants pour les différentes positions de décalage du rotor selon la figure 3;

2

Fig. 5, un schéma d'une deuxième version d'un capteur de position angulaire conforme à l'invention, version suivant laquelle le capteur comporte une piste grosse et une piste fine dite vernier;

Fig. 6, une représentation de la partie rotor du capteur selon la figure 5.

Fig. 6a, un détail de réalisation du rotor selon la figure 6;

Fig. 7, la représentation en linéaire des pistes du stator et du rotor, des signaux d'alimentation polyphasée et des signaux principaux de fonctionnement du capteur deuxième version;

Fig. 9, une représentation équivalente au capteur deuxième version dans une structure linéaire;

Fig. 10, un schéma des métallisations du stator du capteur de position linéaire selon la figure 9;

Fig. 11, un schéma des métallisations du rotor du capteur de position linéaire selon la figure 9;

Fig. 12, un schéma d'une troisième version correspondant à un mode préféré de réalisation d'un capteur de position angulaire conforme à l'invention;

Fig. 13, un schéma du rotor relatif au capteur selon la figure 12;

Fig. 14, la représentation en linéaire des pistes du stator et du rotor de la troisième version, des tensions polyphasées d'alimentation et des signaux principaux de fonctionnement;

Fig. 15, la representation des pistes du stator et du vernier du rotor, ce dernier pour différentes positions, avec les signaux d'alimentation polyphasés, les signaux d'intégration et les portes de commande;

Fig. 16, un schéma relatif à la piste de levée d'ambiguïté et à son fonctiontionnement.

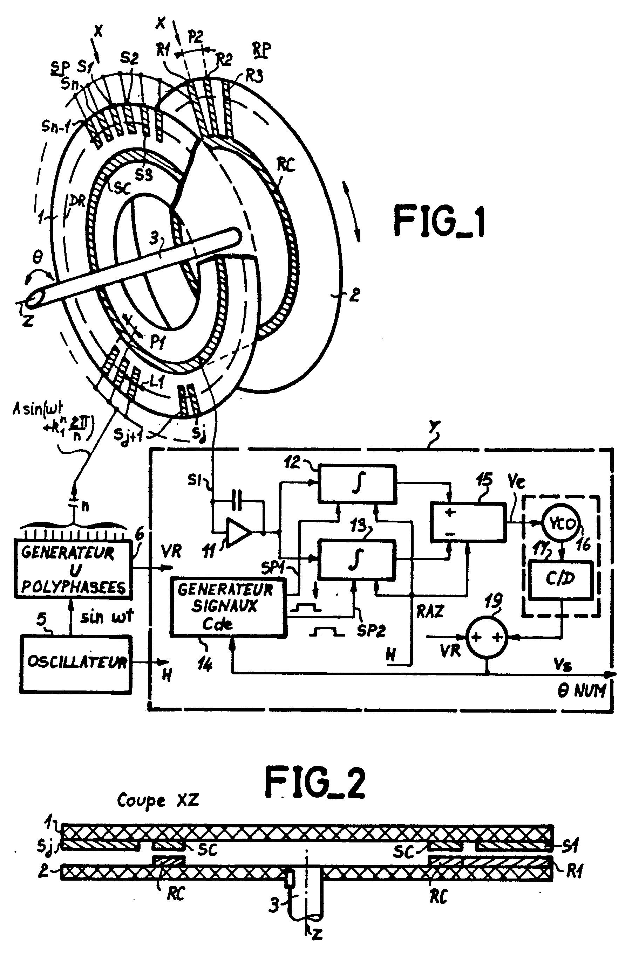

L'invention s'applique tout aussi bien à une structure circulaire pour la mesure des angles qu'à une structure linéaire pour la mesure des longueurs, le déplacement dans le premier cas étant une rotation et dans le second cas une translation. L'invention est exposée à l'aide de la figure 1 pour une structure de base représentant la version la plus simple et est représentée sous forme d'une structure circulaire. Le capteur de position se compose d'un élément plan fixe 1 en matériau diélectrique et qui supporte une série SP d'électrodes rectangulaires conductrices S1, S2, S3 . . . . Sn. Ces électrodes constituent un peigne. Elles sont régulièrement espacées à un pas donné p1 selon une direction de déplacement DR circulaire. Leur nombre $n$ est choisi un multiple d'une puissance de 2 de la forme $n = 2^N$ pour permettre d'utiliser des signaux logiques d'alimentation. Les paramètres $n$ et P1 sont choisis de manière àcouvrir une plage totale NP1 de déplacement correspondant à la longueur totale L à couvrir dans le cas d'un déplacement linéaire ou à l'angle total θà couvrir dans le cas d'un déplacement circulaire, étant entendu que dans ce dernier cas la valeur maximale angulaire correspond à 2 π. Un générateur de tensiins polyphasées 6 alimenté à partir d'un oscillateur 5 produit les $n$ tensions polyphasées décalées d'un incrément de phase $D = 2 \pi/n$ ou $2 \pi/2^N$ d'une électrode à la suivante. Ces $n$ tensions sont ainsi appliquées respectivement aux électrodes S1 à Sn pour créer un champ tournant autour de l'axe de rotation Z perpendiculaire au plan 1 et passant par le centre de cette configuration statorique. Le champ tourne avec une période de rotation imposée par la fréquence 2 π/w du signal de l'oscillateur 5 de pulsation w, chaque période correspondant à une excursion par le champ de la totalité de la plage de déplacement prévue. Le stator 1 comporte, en outre, une électrode collectrice ou de lecture SC qui est utilisée pour recueillir la tension induite correspondant à la rotation θ de l'arbre Z, à mesurer par le système, en structure circulaire. L'électrode SC, ou collecteur, est constituée sous forme d'une couronne conductrice.

Le deuxième élément 2 du capteur est également en matériau diélectrique, plan et forme un rotor situé à proximité du stator I. Sur la figure les éléments 1 et 2 ont été espacés pour la compréhension. Le rotor 2 est entraîné par l'axe mécanique Z. Il comporte également une série RP d'électrodes rectangulaires R1 à Rm, en nombre $m$ inférieur au nombre $n$ des électrodes du stator. Les électrodes du rotor peuvent être de mêmes dimensions que celles S1 à Sn du stator, en particulier, de façon présenter la même largeur L1 selon la direction DR de déplacement. Leur nombre $m$ plus réduit est déterminé de manière à ce que le rotor avec ses élecrodes couvre une portion de la plage de déplacement, en l'occurrence un secteur donné dans la conception circulaire représentée. Les électrodes R1 à Rm sont disposées entre elles à un pas P2 choisi supérieur au pas P1. Le pas P2 des électrodes, leur nombre $m$ et leurs dimensions sont déterminés de manière à obtenir une variation de couplage linéaire lorsque le rotor est décalé angulairement selon la direction circulaire DR de déplacement par rotation de l'arbre 3. Dans l'exemple décrit par la suite on obtient un couplage qui correspond au moins à la surface d'une dent Sj du peigne du stator pour n'importe quelle position de décalage du rotor. L'extrémité des électrodes R1 à Rm est raccordée à une couronne conductrice RC qui a la même configuration que l'électrode collectrice SC du stator et qui vient se placer en vis-à-vis de celle-ci. Ainsi, le champ tournant produit entre les électrodes du rotor et du stator un effet capacitif qui entraîne, par couplage entre les couronnes RC et SC la formation d'une tension induite, cette tension étant ensuite prélevée à l'électrode SC et appliquée aux circuits d'amplification et de traitement 7 disposés en aval.

Les circuits associés à la structure mécanique 1—2—3 comportent l'oscillateur 5 qui alimente le circuit générateur de tensions polyphasées 6 lequel délivre les $n$ tensions polyphasées d'alimentation des électrodes S1 à Sn du stator 1, et également une de ces tensions sous forme numérique pour constituer un signal de référence VR correspondant à une position de référence du rotor par rapport au stator. Le signal induit dans l'électrode SC est appliqué aux circuits d'amplification et de traitement 7 qui comportent, en premier lieu, un amplificateur opérationnel 11 à contre-réaction pour développer une tension proportionnelle au couplage capacitif provoqué par le rotor. La phase de cette tension par rapport à la référence VR des signaux polyphasés est une fonction linéaire de l'angle θ à mesurer, les circuits en aval produisent une fonction phasemètre qui mesure le déphasage.

Suivant l'invention le choix des paramètres structurels comportant: les dimensions des électrodes en particulier la largeur L1; leur pas P1 et P2; et leur nombre $n$ pour le stator et $m$ pour le rotor qui sont choisis de maniere a ce que la relation entre l'angle a mesurer $\theta$ et la phase de la tension induite est rigoureusement linéaire.

Le système présente les avantages suivants: il n'y a pas de lien électrique entre la partie mobile 2 et le stator 1, la partie mobile 2 est totalement passive, les signaux électriques sont liés exclusivement au stator 1, la grandeur physique traduite par un déphasage est facile à fournir sous forme numérique. Le type de capteur représenté se prête, par ailleurs, très bien à l'utilisation des techniques de microlithographies permettant une réalisation très compacte à un prix de revient modéré et avec une précision potentielle excellente, par exemple 16 bits sous unfaible volume. L'utilisation de technique de micro-assemblage et l'utilisation de circuits VLSI spécifiques rend possible la conception de tels capteurs à sortie numérique totalement intégrée.

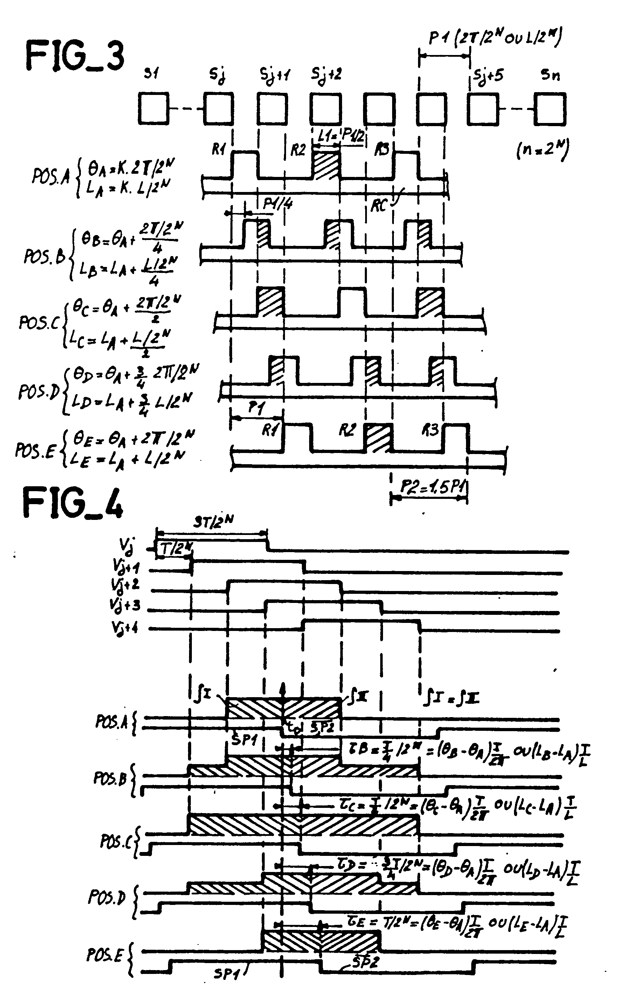

Dans le concept de la structure circulaire figure 1 où la plage couverte est de $2\pi$, le peigne du stator est constitué de $n = 2^N$ zones métallisées ayant une largeur angulaire égale à $L1 = \pi/2^N$ pour ce capteur rotatif et qui serait $L/2^{N+1}$ pour un capteur linéaire (L représentant l'étendue totale de la plage de mesure), l'intervalle séparant chaque zone métallisée étant égal à la largeur de la zone, c'est-à-dire que la largeur L1 est choisie égale à la moitié du pas P1. Cet exemple de réalisation des électrodes du stator est reporté en aut de la figure 3, en considérant un développement linéaire. Audessous on a représenté, pour différentes positions A à E le rotor 2 qui peut consister en trois électrodes R1, R2 et R3 de même largeur L1 que les électrodes du stator mais avec un pas différent $P2 = 1,5$ fois P1 c'est-à-dire $3\pi/2^N$ pour un capteur rotatif, et égal à $3L/2^{N+1}$ pour un capteur linéaire. Une position relative des zones métallisées des éléments 1 et 2 est choisie comme position de référence il s'agit de la position A représentée sur la figure 3.

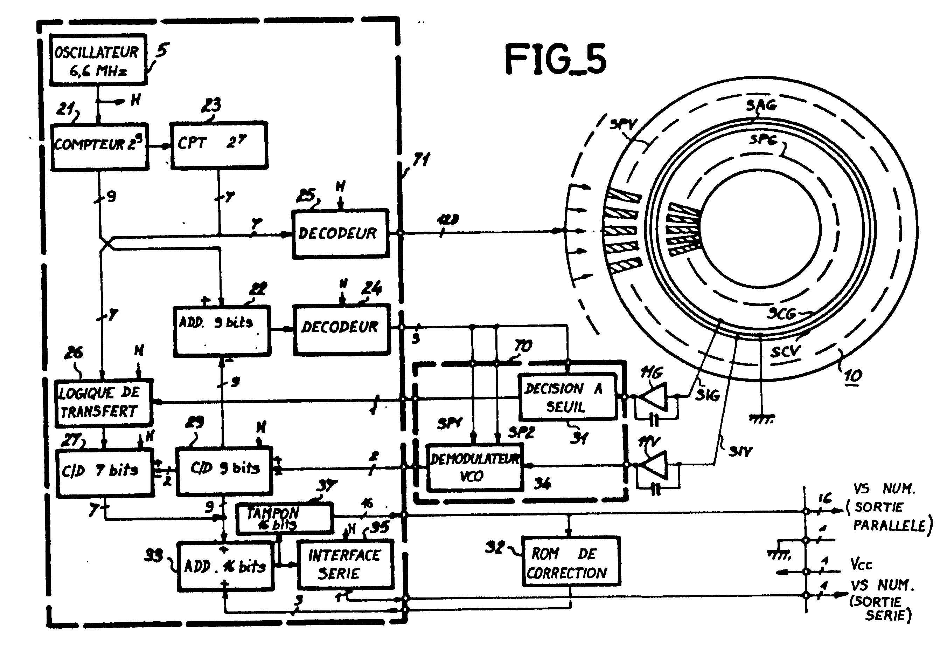

La figure 2 représente en coupe suivant les directions X et Z les éléments 1 et 2 pour montrer la partie diélectrique et les dépôts métalliques en vis-à-vis avec un interface très faible entre ces parties, de l'ordre par exemple de 10 à 20 microns. L'arbre mécanique 3 peut être fixé d'un côté ou de l'autre du rotor comme représenté sur la figure 1 ou sur la figure 2 Selon le cas, le diélectrique support 1 est percé ou non dans sa partie centrale. L'alimentation du peigne statorique est faite par les tensions polyphasées en nombre $n$ et qui sont constituées par des signaux rectangulaires pouvant être élaborés par des circuits logiques. Leur amplitude est identique et leur durée $3T/2^N$, T étant la période des signaux polyphasés. Le déphasage entre deux voies consécutives est égal à $T/2^N$. Ces signaux ont été représentés par Vj à Vj+4 pour les électrodes Sj à Sj+4, à la partie supérieure de la figure 4.

Le fonctionnement est indiqué maintenant à l'aide des figures 3 et 4 dans lesquelles on a considéré successivement cinq positionnements successifs décalés du rotor. Dans la position A de référence, l'électrode R2 centrale du rotor est en vis-à-vis d'une électrode, en l'occurrence Sj+2, du stator et les deux autres électrodes R1, R3 se situent chacune dans un intervalle entre deux électrodes du stator. Pour cette position il y a donc couplage total entre l'électrode Sj+2 et l'électrode R2 lorsque la tension d'alimentation destinée à cette électrode est appliquée.

La figure 4 montre l'intégration correspondante qui a lieu pour cette position A. Les positions B, C, D et E sont déduites de la première position par un décalage considéré à chaque fois égal àun quart du pas P1 de manière à montrer le fonctionnement pour ces quatre positions successives. Les zones hachurées représentent les zones couplées capacitivement au stator lorsque celui-ci reçoit sur l'électrode correspondante une tension d'alimentation. La position E présente un décalage d'amplitude égal au pas P1 par rapport à la position 20 et on se retrouve donc dans les conditions initiales avec un couplage total par le biais de l'électrode R2 centrale avec l'électrode Sj+3.

Les circuits 7 utilisés pour traiter la tension induite S1 comportent des circuits d'intégration représentés en 12 et en 13 pour intégrer successivement pendant un premier intervalle de temps et pendant un second intervalle de temps délimité par des signaux de porte SP1 et SP2 dont le front arrière du premier correspond au front avant du second. Ces signaux sont produits par un générateur 14 qui est alimenté par une boucle d'asservissement de manière à ce que la transition des fronts précités des signaux SP1 et SP2 se produise exactement à l'instant où l'intégration est égale à la moitié de sa valeur. Compte tenu de la forme rectangulaire des signaux polyphasés d'alimentation, la tension induite S1 a la même forme et on intègre des signaux rectangulaires; en conséquence, la surface intégrée est rectangulaire comme représentée sur la figure 4 en bas ou correspond à plusieurs aires rectangulaires et le barycentre de cette surface est situé à une abscisse qui correspond à l'instant où l'intégration atteint à la moitié de sa valeur. On peut donc relier cet instant à la position du barycentre de la surface totale intégrée. Pour obtenir ce résultat les sorties des intégrations 12 et 13 sont appliquées à un circuit soustracteur 14 qui délivre, le cas échéant, la différence Ve non nulle correspondante, cette mesure s'effectuant périodiquement, à la période T de fonctionnement, par application au circuit 14 d'un signal d'horloge correspondant H. Le signal d'erreur Ve est appliqué à un sommateur 19 avec le signal de référence VR, la sortie du sommateur constituant le signal de commande du générateur 14 ainsi que le signal représentatif du déphasage. Dès apparition d'une tension d'erreur Ve en sortie du circuit 15, le rattrapage s'effectue par déplacement de la transition des fronts en sorte que cette valeur Ve s'annule. Il en résulte un signal $VS = VR+Ve$ indicatif du déphasage pour produire ce signal VS sous forme numérique les circuits suivants peuvent être prévus:un oscillateur controlé par tension 16 qui transforme la valeur Ve en une variation de fréquence laquelle est traduite par un compteur-décompteur 17 en un mot binaire. Le circuit 19 est un additionneur logique qui reçoit par ailleurs le signal de référence VR sous forme, binaire et la sortie binaire de ce circuit est appliqué au générateur 14 et par ailleurs, vers la sortie pour exploitation.

Le fonctionnement des circuits est apparent à l'aide des formes d'onde de la figure 4 qui représentent à la partie supérieure les tensions polyphasées successives relatives à la succession d'electrodes Sj à Sj+4. Les signaux d'alimentation ont une durée $3T/2^N$, T étant la période du système c'est-à-dire la durée celle au cours de laquelle le champ tournant a parcouru la plage de déplacement, c'est-à-dire le cercle. Le decalage entre ces signaux polyphases est egal au temps $T/2^N$ nécessaire au champ pour parcourir l'étendue correspondant au pas P1 qui sépare deux électrodes successives. A la partie inférieure sont représentés en position A, B, C, D et E successivement les signaux intégrés, l'instant médian to+ $\tau$ de l'intégration étant identifié de part et d'autre par des hachures distincts. Au-dessous de ces signaux intégrés se trouve dessinées les signaux de porte SP1 et SP2 après stabilisation de la boucle. On voit que l'instant to+ $\tau$ correspondant a la moitié de l'intégration se déplace linéairement dans le temps en même temps que le décalage angulaire (ou linéaire) à mesurer dû au deplacement du rotor (ou d'un curseur). Le retard $\tau x$ présente par rapport à l'instant to correspondant à la position A initiale de référence est une fonction linéaire du décalage linéaire $\theta x$ (ou Lx) du conducteur mobile 2. Les valeurs ont été indiqués pour les quatre positions successives, la variation du retard d'une position à l'autre correspondant à $(T/4)/2^N$.

On considère maintenant, à l'aide notamment des figures 5et 6, une version améliorée de celle décrite précédemment. Suivant cette nouvelle version la structure de piste SP est renouvelée sur le stator 10 de manière à avoir une première piste SPG destinée à une mesure grosse et une deuxième piste SPV destinée à une mesure fine. Ces deux pistes concentriques et identiques du point de vue nombre d'électrodes et alimentation, sont séparées par un anneau de garde SAG constitué par une piste circulaire interposée entre deux autres pistes circulaires formant l'une une électrode collectrice SCG associée à la piste SPG et l'autre, une électrode collectrice SCV associée à la piste SPV. Le stator 10 correspondant est représenté sur la figure 5.

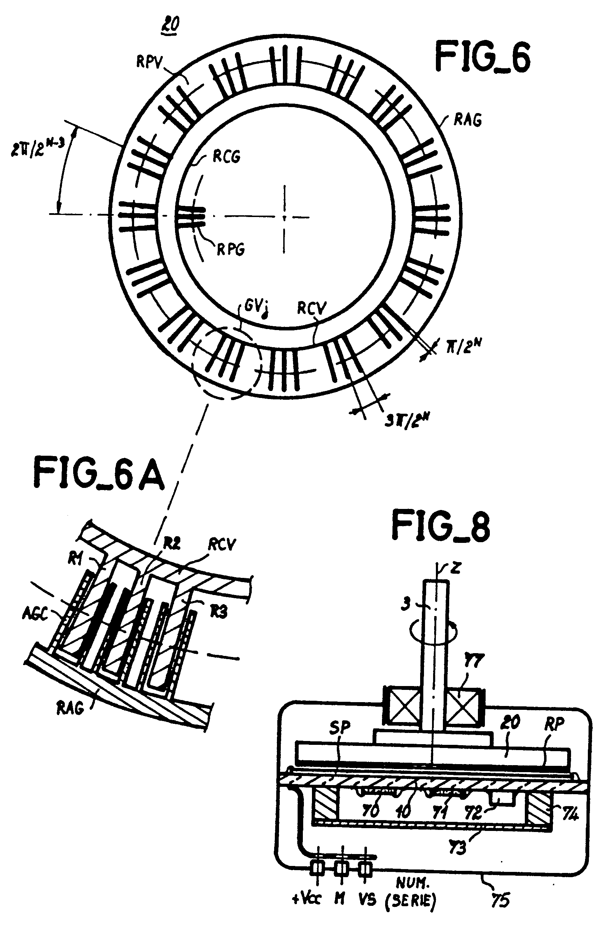

Le rotor 20 placé en vis-à-vis de ce stator est indiqué sur la figure 6; comporte une première piste RPG (identique à la piste RP de la figure 1) pour la mesure grosse qui est connectée à l'électrode de couplage RCG. Cette piste comporte, par exemple, un groupement de trois électrodes qui coopèrent avec la piste SPG du stator et permet la production d'un courant induit sur le collecteur SCG qui est en vis-àvis de l'électrode RCG. Le rotor 20 comporte une deuxième piste RPV pour la mesure fine et constituant un vernier par duplication du groupement de trois électrodes à des intervalles angulaires (ou linéaires) déterminés. Dans le cas représenté la métallisation correspondante est reproduite seize fois, à des secteurs angulaires décalés de $2\pi/16$, c'est-à-dire $2\pi/2^{N-3}$. L'anneau de garde extérieur RAG du rotor permet de manière connue d'assurer l'uniformité du champ entre les armature des pistes RPV et SPV. De même, l'anneau de garde SAG sur le stator, disposé entre les collecteurs SCG et SCV, préserve l'uniformité du champ entre les pistes SPG et SPV.

La figure 6a représente l'un des ces groupements GVj de la piste RPV du rotor 20 pour mettre en évidence certaines particularités de l'anneau de garde RAG qui se prolonge latéralement de part et d'autre de chacune des électrodes R1, R2 et R3 de chaque groupement par des métallisations AGC qui encadrent pratiquement ces électrodes de manière également à préserver les couplages magnétiques uniformes et éviter des couplages latéraux entre électrodes.

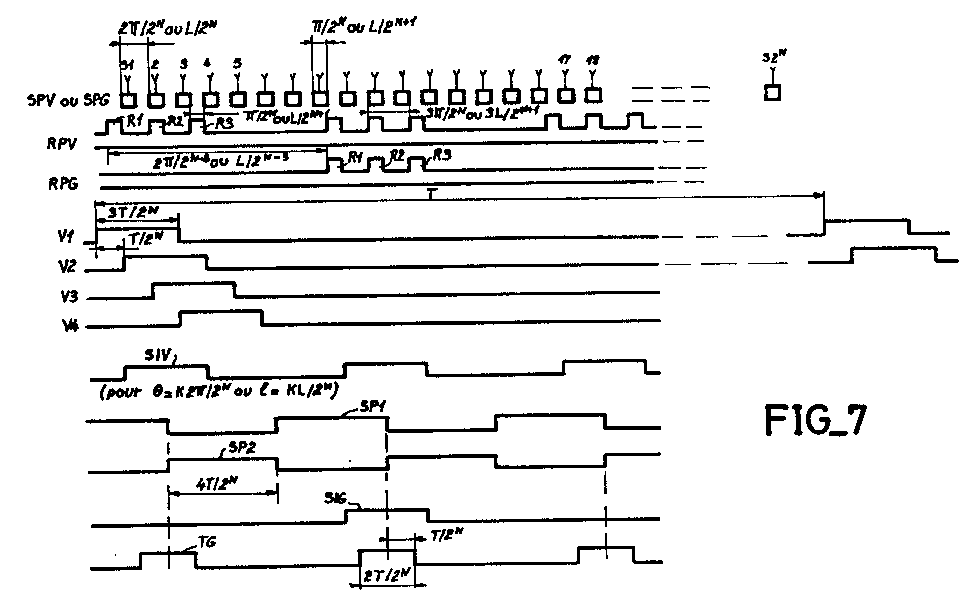

La figure 7, représente de manière équivalente aux figures 3 et 4 et de manière successive la disposition structurelle des pistes dans cette nouvelle version et les signaux particuliers de fonctionnement. On distingue de haut en bas, en premier lieu, la représentation des pistes SPV ou SPG du stator 10 constituées chacune de $n = 2^N$ électrodes. Au-dessous se trouve la piste vernier RPV du rotor avec les groupements séquentiels de trois électrodes R1, R2, R3 et au-dessous la piste RPG grosse du rotor également avec trois électrodes R1, R2, R3 et un seul groupement. Sont indiqués ensuite les quatres signaux V1, V2, V3 et V4 qui alimentent les électrodes indiquées S1, S2, S3 et S4 du stator, en considérant le groupement de RPV dont l'électrode centrale R2 est coïncidente avec l'électrode 2 du stator. Les signaux VI à V4 sont reproduits à une cadence égale à la période T définie précédemment. On distingue ensuite le signal SIV induit sur le collecteur vernier SCV, les signaux de porte SP1 et SP2 qui commandent la démodulation, le signal induit SIG sur le collecteur gros SCG, et un signal particulier TG comportant autant d'impulsions qu'il y a de groupements sur la piste vernier et qui permet de localiser la piste grosse RPG laquelle se trouve en vis-à-vis d'un groupement de la piste vernier RPV.

Le fonctionnement correspondant du système à l'aide de ces signaux va être décrit à l'aide des circuits représentés sur la figure 5. On distingue comme précédemment pour chaque voie, grosse et fine, un amplificateur opérationnel, respectivement 11G et 11V, à liaison capacitive pour transmettre les signaux induits SIG et SIV. La voie grosse est appliquée à un circuit de décision à seuil 31 qui reçoit le signal TG qui le débloque seize fois par tour; l'un des créneaux TG correspond dans la position représentée au couplage entre la piste RPG avec les électrodes S9, S10, S11 lorsque celles-ci sont excitées. L'exemple proposé à la figure 5 porte sur un capteur rotatif mais les mêmes circuits conviennent pour un capteur linéaire. La solution proposée permet d'obtenir une résolution du codage de 16 bits. Le peigne du stator comporte 128 dents ce qui permet d'avoir un vernier d'ordre 16. Une horloge de base à 6,6 MHz dans l'oscillateur 5 est associée à un diviseur 16 bits obtenu par le compteur $2^9$ 21, le compteur $2^7$ 23 et le décodeur 25 pour produire les 128 signaux polyphasés alimentant en parallèle les peignes SPV et SPG du stator 10. La

EP 0 270 440 B1

fréquence de base 1/T ainsi obtenue est de 100Hz. Les signaux induits sur les collecteurs gros et vernier présentent respectivement les fréquences 100 et 1600Hz. Des boucles de poursuite du second ordre constituées par les circuits amplificateur opérationnel 11V, compteur-décompteur 9 bits 29, compteur-décompteur 7 bits 27, additionneur 9 bits 22, décodeur 24, logique de transfert 26, amplificateur opérationnel 11G et décision par comparaison à seuil 31, permettent d'asservir l'ensemble compteur-décompteur 16 bits représenté par les circuits 27 et 29 sur la valeur du déphasage à mesurer qui représente la valeur numérique de la grandeur physique à coder. L'asservissement s'effectue à partir du signal vernier SIV avec une boucle primaire constituée par les circuits amplificateur opérationnel 11V, démodulateur à oscillateur contrôlé par tension 34, compteur-décompteur 9 bits 29, additionneur 9 bits 22 et décodeur 24, faisant intervenir les 9 bits de plus petit poids de l'ensemble compteurdécompteur 27 et 29. L'exploitation du signal gros SIV après comparaison àun seuil en 31 permet de controler la cohérence des 7 bits de plus fort poids. La vitesse de poursuite maximum théorique dans cette solution est de 100 tours/s. La grandeur codée sur 16 bits est disponible en sortie du compteur-décompteur, la communication vers l'extérieur s'effectue sous forme série par l'intermédiaire d'un additionneur 33 suivi d'un circuit interface parallèle-série 35; elle peut s'effectuer en parallèle par l'intermédiaire d'une mémoire tampon 37 en aval de l'additionneur 33. Une mémoire morte 32 de correction d'erreur peut être prévue.

Le circuit 70 comportant le circuit de décision à seuil 31 et le démodulateur à oscillateur controlé par tension 34 représentent un ensemble analogique qui peut être réalisé en circuit intégré. La partie restante 71 peut être entièrement numérique et réalisée en prédiffusé CMOS.

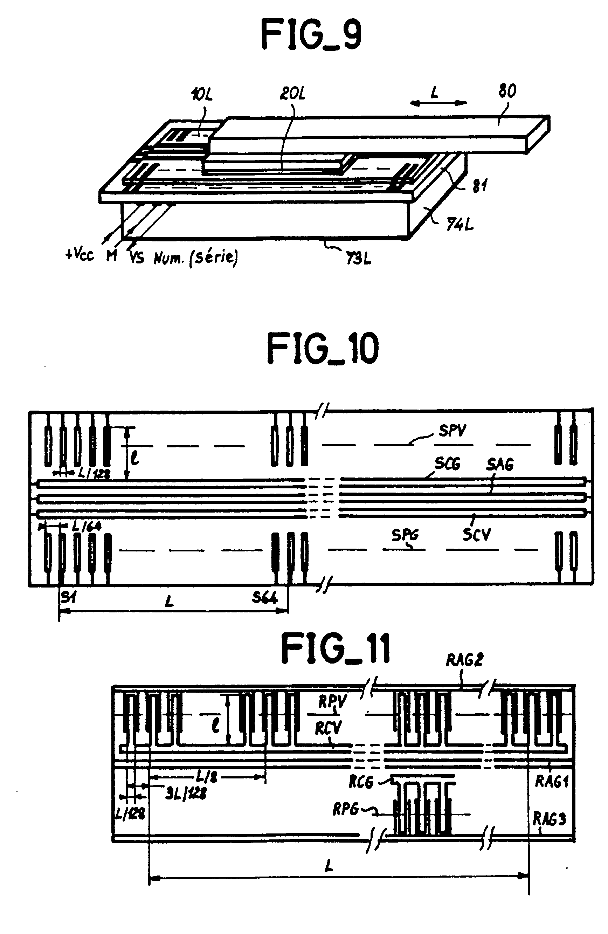

La figure 8 représente une réalisation possible du capteur rotatif qui vient d'être décrit ou celui de la première version figure 1. Le stator et le rotor peuvent être obtenus par photogravure de verre ou de silicium métallisé, l'épaisseur de la couche métallique peut être de 1 à 2 microns et la précision globale de l'ordre de 2 microns. Une formule possible représentée est d'utiliser une structure d'interconnexion en céramique multicouche cocuite 1 pour constituer le stator 10, cette structure permet une grande souplesse au niveau des liaisons électriques tesl les éléments 70, 71 et 72 ce dernier représentant les circuits qui ne peuvent pas être intégrés c'est-à-dire les amplis opérationnels 11V et 11G. La structure cocuite permet aussi une bonne compatibilité des coefficients de dilatation thermique et l'aménagement d'une cavité hermétique pour le câblage des puces des circuits de traitement. La cavité hermétique est représentée par le couvercle 73 et les montants 74. L'ensemble est placé sous un boîtier 75 qui laisse passer vers l'extérieur les sorties de connexions tension continue, masse et signal VS numerique et, par ailleurs, la sortie de l'arbre 3 par l'intermédiaire d'un roulement àbilles 77.

Les figures 9, 10 et 11 représentent une structure analogue sur un capteur linéaire. La figure 9 montre le capteur; les éléments 10L et 20L représentent le stator linéaire et le rotor linéaire qui est entraîné par la pièce 80. L'élément 81 est une structure d'interconnexion pour alimenter les électrodes du stator 10L. Les circuits sont à l'intérieur du boîtier hermétique 74L fermés par le couvercle 73L.

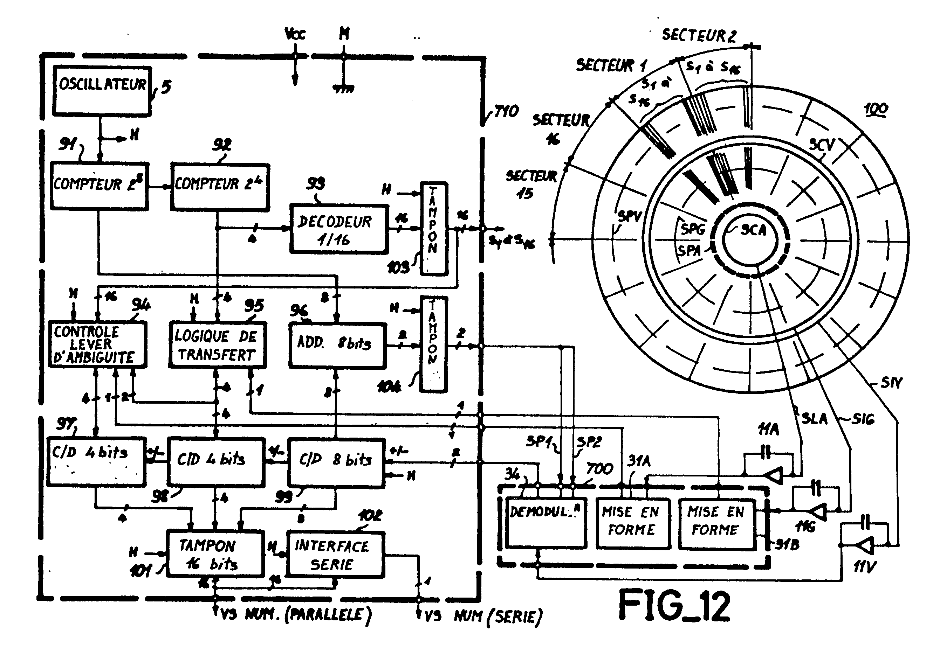

Un exemple de réalisation des pistes du stator et du rotor est montré sur les figures 10 et 11. On a considéré un réseau 64 phases dédoublé pour assurer la continuité de la mesure sur la totalité de la course utile. La figure 11 montre la structure des bandes de garde qui comporte la bande centrale RAG1 et les bandes latérales RAG2 et RAG3 prolongées au niveau de chacune des électrodes. La bande RAG1 est positionnée en vis-à-vis de la bande SAG du stator.

L'avantage des ces structures à vernier est d'apporter une amelioration sensible des performances dynamiques, la tension d'erreur étant plus fréquemment disponible, par exemple 16 fois par tour dans l'exemple décrit pour le capteur rotatif selon les figures 5 et 6. Une amélioration sensible de la précision est obtenue car le vernier fait participer la totalité du peigne stator à l'élaboration de la tension d'erreur ce qui se traduit par un moyennage d'un erreurs de photogravure et une élimination au premier ordre des erreurs induites par une mauvaise position de la partie mobile.

Les figures 12 et suivantes se rapportent maintenant à une structure préférentielle de réalisation du capteur selon une structure dite périodique et qui est dérivée de la structure vernier précédente.

La formule à vernier conduit, quand on recherche une grande précision à avoir un nombre élevé de dents aux peignes vernier SPV et gros SPG du stator 20 ce qui entraîne la production d'un nombre équivalent de tensions polyphasées et par conséquent un coût très important des circuits de traitement 70. Ainsi, dans l'exemple précité on avait envisagé 128 dents et autant de tensions d'alimentations polyphasées. Dans la structure périodique envisagée, cet inconvénient est éliminé et, par ailleurs, d'autres avantages significatifs sont révélés au niveau de la précision et des performances dynamiques.

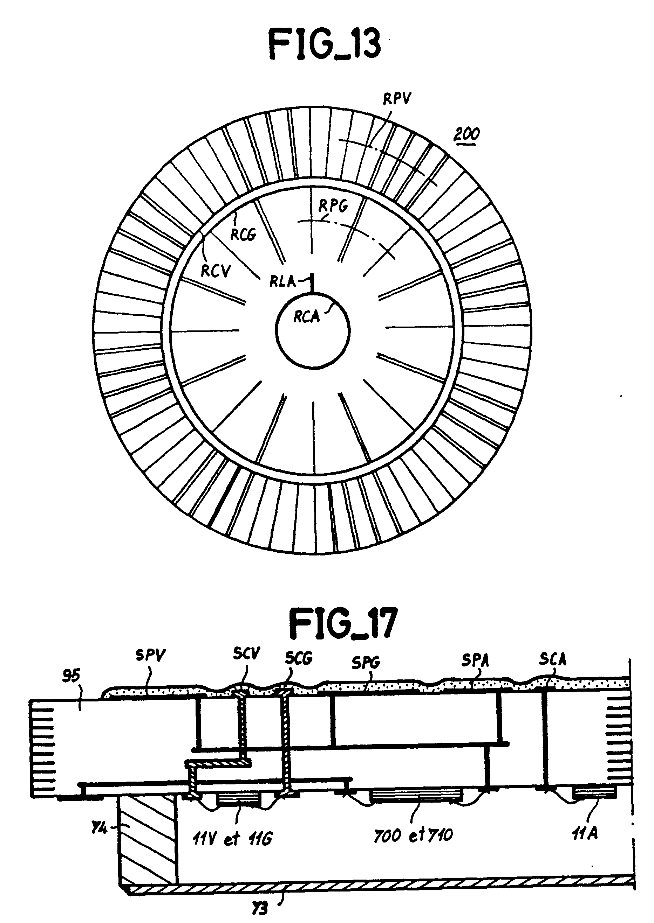

L'étendue de mesure du capteur est divisée en $2^{N2}$ secteurs égaux. Chaque secteur est pourvu d'un peigne métallisé analogue à celui décrit dans la solution précédente; ce peigne comporte $2^{N1}$ dents ou électrodes pour chaque secteur. Les points homologues de chaque secteur sont ainsi alimentés en parallèle. Dans ces conditions le nombre total de tensions polyphasées nécessires est égal à $2^{N1}$ alors que le nombre global de dents des peignes vernier SPV et gros SPG du stator 200 est de $2^{N1+N2}$. Le choix N1 = N2 constitue un bon compromis. Dans l'exemple représenté, on a choisi N1 = N2 = 4, ce qui correspond à la production de seulement 16 tensions polyphasées différentes pour une étendue totale de mesure comportant 256 électrodes par peigne du stator. Dans cette strudure, les pas des curseurs sont, en ce qui concerne le vernier RPV représenté sur le figure 13, $2\pi/2^{N1+N2-2}$ pour un capteur rotatif et $L/2^{N1+N2-2}$ pour un capteur linéaire, et pour la piste RPG, $2\pi/2^{N2}$ pour un capteur rotatif et $L/2^{N2}$ pour un capteur linéaire. Pour simplifier les représentations figures 12 et 13 les anneaux de garde n'ont pas été indiqués.

On constate que la solution entraîne une ambiguïté dans la mesure qui se situe au niveau de l'identification des secteurs. Un dispositif de levée d'ambiguïté est utilisé. C'est le rôle de la piste de levée d'ambiguïté SPA du stator à laquelle est associé le curseur levée d'ambiguïté RLA au rotor.

Le stator 100 comporte trois zones, une zone vernier avec la piste SPV, une zone gros avec la piste SPG, chacune étant constituée d'électrodes équidistantes en nombre $2^{N1+N2}$ et chacune de ces pistes est associée àun collecteur, respectivement SCV et SCG; et une zone levée d'ambiguïté avec une piste SPA formée de $2^{N2}$ secteurs successifs et associée àun collecteur SCA.

Le rotor 200 comporte similairement trois zones, une zone curseur vernier RPV constitué de $2^{N1+N2-2}$ électrodes métallisées réparties en 16 secteurs successifs comportant successivement un secteur avec quatre couples de deux électrodes rapprochées puis un secteur avec quatre électrodes, et ainsi de suite. Une deuxième zone formant un curseur gros est constituée par la piste RPG pour laquelle on a, pour chaque secteur, un couple de deux électrodes suivi d'une seule électrode pour le secteur suivant. Enfin, une zone curseur levée d'ambiguïté constitué par une électrode RLA connectée à la piste RCA de couplage au collecteur SCA du stator. Les électrodes des pistes RPV et RPG sont couplées aux électrodes collectrices du stator par l'intermédiaire des pistes de couplage RCV et RCG.

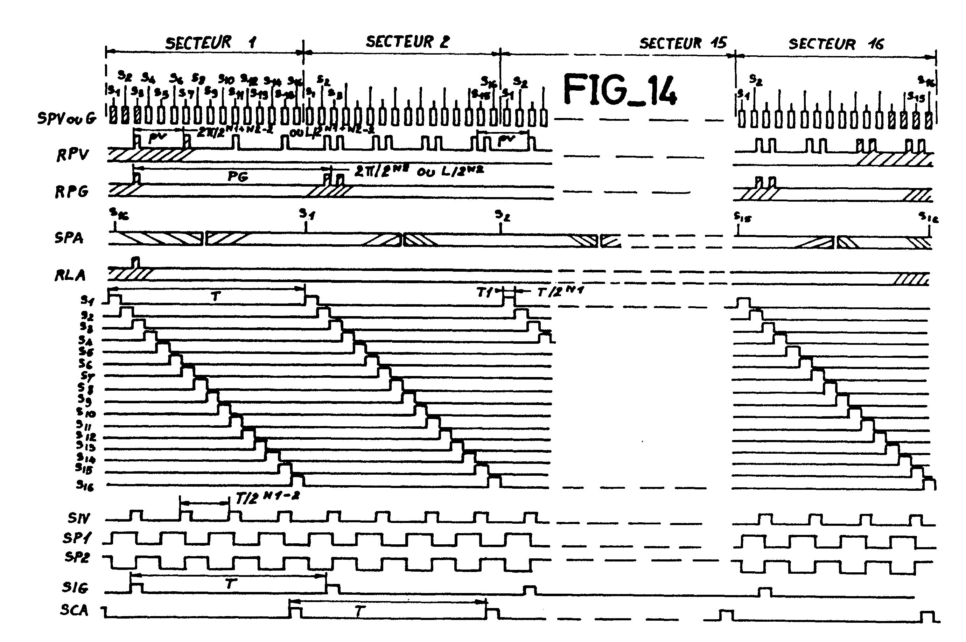

Le stator 200 est alimenté par 16 tensions polyphasées de période T. Chacune de ces tensions, S1 à S16, est un signal logique de durée $T1 = T/2^{N1}$ séparé temporellement des tensions voisines de même durée T1. Les signaux S1 à S16 sont distribuées au peigne vernier et gros ainsi que sur les 16 éléments de la piste levée d'ambiguïté, ils sont détaillés sur la figure 14 en vis-à-vis des secteurs du stator.

La figure 14 montre, de manière similaire au cas précédent les dispositions en ligne des électrodes du stator et du rotor ainsi, que dans le cas présent, les pistes levée d'ambiguïté. Les formes d'onde S1 à S16 relatives aux 16 tensions polyphasées peuvent être produites très facilement par un simple circuit logique.

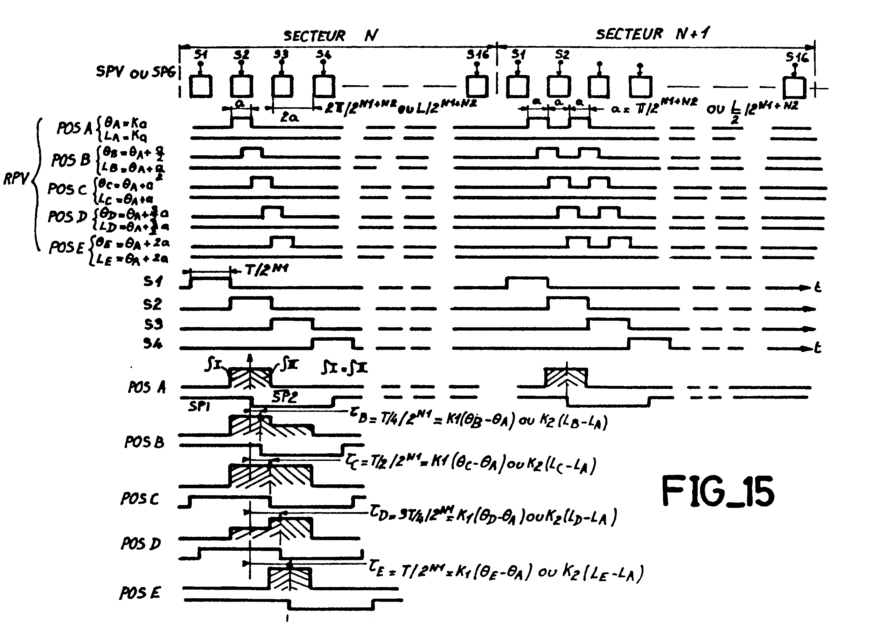

Les tensions induites au collecteur sont représentées sur la figure 15 où on a considéré comme précédemment cinq positions successives A, B, C, D, E pour le décalage angulaire du rotor avec les tensions intégrées correspondantes et le décalage temporel progressif du barycentre de l'intégration. Ce décalage temporel varie de manière linéaire avec le déplacement angulaire ou linéaire de la partie mobile 200. Le circuit de traitement gère la transition des signaux de commande SP1 et SP2 du démodulateur en sorte que les parties intégrées s'égalisent de chaque côté de la transition de ces signaux. Dans ces conditions, la position temporelle de la transition correspond au barycentre de la surface intégrée et cette position est rigoureusement proportionnelle au déplacement de la partie mobile. La période de la tension vernier est égale à $T/2^{N1-2}$ ce qui correspond pour une fréquence de base $1/T = 800Hz$ et $N1 = 4$, à une fréquence de 3200Hz valeur excellente pour les performances dynamiques de la mesure. Ces valeurs peuvent être obtenues avec des circuits de traitement du type CMOS standard ce qui constitue un avantage très important de la structure périodique considérée. Sur le collecteur gros, la tension induite a une période égale à T; cette tension est exploitée comme un signal logique. Sur le collecteur SCA de levée d'ambiguïté la tension induite a également une période T elle est exploitée de façon similaire à la tension gros.

Le circuit de traitement représenté sur la figure 12 concerne le capteur rotatif 100. Les mêmes circuits conviennent pour un capteur linéaire. Ce schéma est destiné à l'obtention d'une précision de codage de 16 bits avec les paramètres ayant les valeurs suivantes $N1 = N2 = 4$ et $1/T = 800Hz$. Avec ces paramètres, les peignes stator comportent 256 dents et la fréquence de la tension vernier est de 3200Hz. Les 16 signaux sont obtenus à partir d'un oscillateur 5 à 3,27MHz associé àun diviseur 12 bits constitué par les compteurs 91, 92 et le décodeur 93. Le principe du traitement est analogue a celui du capteur non périodique de la figure 5. Une boucle de poursuite du second ordre permet d'asservir un compteur-décompteur 16 bits sur la valeur du déphasage mesuré qui représente la valeur numérique de la grandeur physique à coder. L'asservissement s'effectue à partir de la tension: vernier avec une boucle primaire faisant intervenir les huit bits de faible poids de compteur-décompteur. Les 4 bits suivants sont obtenus par surveillance de la tension gros. Enfin, les 4 bits de fort poids sont déterminés à partir des informations provenance du collecteur de levée d'ambiguïté.

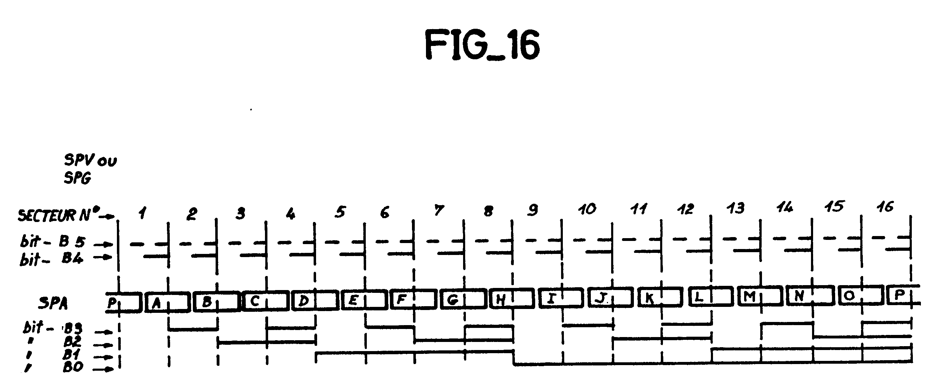

La figure 16 illustre une solution permettant d'assurer simplement cette fonction avec une excellente protection entre les aléas de détection. Les huit bits de fort poids sont initialisés au début de la mise sous tension du codeur à partir des informations gros et levée d'ambiguïté. L'évolution de ces bits est ensuite assurée par l'asservissement vernier. La cohérence de ces bits avec les informations gros et levée d'ambiguïté est cependant surveillée en permanence en vue d'un réajustage éventuel, suite àun parasitage par exemple.

L'opération de levée d'ambiguïté peut être menée à bien en s'appuyant sur les points suivants:

la valeur des bits B4 et B5 déterminés par l'exploitation du signal gros SIG. Ces bits sont les deux bits de plus fort poids du compteur-décompteur 98 (Fig. 12),

la valeur détectée par le signal de levée d'ambiguïté SLA dans le circuit de contrôle de levée d'ambiguïté 94. Suivant la phase de ce signal par rapport aux tensions déphasées d'alimentation S1 à S16, il est attribué aux 16 signaux logiques possibles appelés A à P, les valeurs consignées dans le tableau ci-après:

| SLA en phase avec | VALEURS BINAIRES DE | | | | | | | | | | | | | | | |
|---|---|---|---|---|---|---|---|---|---|---|---|---|---|---|---|---|
| | A | B | C | D | E | F | G | H | I | J | K | L | M | N | O | P |
| S1 | 1 | 0 | 0 | 0 | 0 | 0 | 0 | 0 | 0 | 0 | 0 | 0 | 0 | 0 | 0 | 0 |
| S2 | 0 | 1 | 0 | 0 | 0 | 0 | 0 | 0 | 0 | 0 | 0 | 0 | 0 | 0 | 0 | 0 |
| S3 | 0 | 0 | 1 | 0 | 0 | 0 | 0 | 0 | 0 | 0 | 0 | 0 | 0 | 0 | 0 | 0 |
| S4 | 0 | 0 | 0 | 1 | 0 | 0 | 0 | 0 | 0 | 0 | 0 | 0 | 0 | 0 | 0 | 0 |
| S5 | 0 | 0 | 0 | 0 | 1 | 0 | 0 | 0 | 0 | 0 | 0 | 0 | 0 | 0 | 0 | 0 |
| S6 | 0 | 0 | 0 | 0 | 0 | 1 | 0 | 0 | 0 | 0 | 0 | 0 | 0 | 0 | 0 | 0 |
| S7 | 0 | 0 | 0 | 0 | 0 | 0 | 1 | 0 | 0 | 0 | 0 | 0 | 0 | 0 | 0 | 0 |
| S8 | 0 | 0 | 0 | 0 | 0 | 0 | 0 | 1 | 0 | 0 | 0 | 0 | 0 | 0 | 0 | 0 |
| S9 | 0 | 0 | 0 | 0 | 0 | 0 | 0 | 0 | 1 | 0 | 0 | 0 | 0 | 0 | 0 | 0 |
| S10 | 0 | 0 | 0 | 0 | 0 | 0 | 0 | 0 | 0 | 1 | 0 | 0 | 0 | 0 | 0 | 0 |
| S11 | 0 | 0 | 0 | 0 | 0 | 0 | 0 | 0 | 0 | 0 | 1 | 0 | 0 | 0 | 0 | 0 |
| S12 | 0 | 0 | 0 | 0 | 0 | 0 | 0 | 0 | 0 | 0 | 0 | 1 | 0 | 0 | 0 | 0 |
| S13 | 0 | 0 | 0 | 0 | 0 | 0 | 0 | 0 | 0 | 0 | 0 | 0 | 1 | 0 | 0 | 0 |
| S14 | 0 | 0 | 0 | 0 | 0 | 0 | 0 | 0 | 0 | 0 | 0 | 0 | 0 | 1 | 0 | 0 |
| S15 | 0 | 0 | 0 | 0 | 0 | 0 | 0 | 0 | 0 | 0 | 0 | 0 | 0 | 0 | 1 | 0 |
| S16 | 0 | 0 | 0 | 0 | 0 | 0 | 0 | 0 | 0 | 0 | 0 | 0 | 0 | 0 | 0 | 1 |

L'élaboration des données logiques A à P est réalisé avec des circuits à coïncidence, par exemple, simplement avec des bascules.

Les relations entre les bits B4, B5 les signaux logiques A à P et la valeur des bits de fort poids B0, B1, B2 et B3, du code de sortie du codeur sont consignées dans le tableau suivant:

| Valeur Binaire 1 pour | Equation Logique Programmée $X = B4.B5$, $Y = \overline{B4}.\overline{B5}$ $Z = B4 \oplus B5$ | Bits de fort poids | | | | SPG Secteur concerné N° |
|---|---|---|---|---|---|---|
| | | B0 | B1 | B2 | B3 | |
| A | A.X + P.Y + (A+P)Z | 0 | 0 | 0 | 0 | 1 |
| B | B.X + A.Y + (B+A)Z | 0 | 0 | 0 | 1 | 2 |
| C | C.X + B.Y + (C+B)Z | 0 | 0 | 1 | 0 | 3 |
| D | D.X + C.Y + (D+C)Z | 0 | 0 | 1 | 1 | 4 |
| E | E.X + D.Y + (E+D)Z | 0 | 1 | 0 | 0 | 5 |
| F | F.X + E.Y + (F+E)Z | 0 | 1 | 0 | 1 | 6 |
| G | G.X + F.Y + (G+F)Z | 0 | 1 | 1 | 0 | 7 |
| H | H.X + G.Y + (H+G)Z | 0 | 1 | 1 | 1 | 8 |
| I | I.X + H.Y + (I+H)Z | 1 | 0 | 0 | 0 | 9 |
| J | J.X + I.Y + (J+I)Z | 1 | 0 | 0 | 1 | 10 |
| K | K.X + J.Y + (K+J)Z | 1 | 0 | 1 | 0 | 11 |
| L | L.X + K.Y + (L+K)Z | 1 | 0 | 1 | 1 | 12 |
| M | M.X + L.Y + (M+L)Z | 1 | 1 | 0 | 0 | 13 |
| N | N.X + M.Y + (N+M)Z | 1 | 1 | 0 | 1 | 14 |
| O | O.X + N.Y + (O+N)Z | 1 | 1 | 1 | 0 | 15 |
| P | P.X + O.Y + (P+O)Z | 1 | 1 | 1 | 1 | 16 |

Ces valeurs peuvent être fournies aisément en utilisant un réseau logique programmable dit PLA qui est l'abréviation de "Programmable Logic Array" en anglo-saxon, ce réseau recevant les données A à P, B4 et B5 et ne délivrant que les 16 valeurs précitées de l'ensemble de bits B0, B1, B2 et B3. A ces valeurs correspondent respectivement les secteurs là 16 de la piste SPG (Fig. 16).

La valeur VS codée est disponible comme précédemment sous forme parallèle ou série. Le circuit VLSI de traitement numérique 710 est sensiblement plus simple que dans la formule non périodique, le circuit de traitement analogique 700 est par contre légèrement plus complexe àcause de la voie complémentaire 31A de levée d'ambiguïté. Cet accroissement de complexité est cependant tempéré par l'exigence de précision moins élevée au niveau du démodulateur 8 bits 34 pour la structure périodique contre 9 bits pour la structure non périodique.

Les avantages de la structure périodique sont du point de vue précision une amélioration par sensibilité moindre vis-à-vis des erreurs de positionnement du rotor par rapport au stator (erreur de centrage et de parallélisme); à performance dynamique égale une vitesse d'analyse temporelle nécessaire beaucoup plus faible; des exigences de performances plus faibles au niveau du démodulateur. La précision potentielle du codeur périodique peut être sensiblement accrue tout en conservant un traitement réaliste et en maintenant une précision du démodulateur équivalente à 8 bits. Enfin les performances dynamiques sont sensiblement améliorées.

La figure 17 représente un exemple de réalisation du stator en utilisant une structure d'interconnexion 95 en céramique multicouche cocuite. La céramique est initialement fabriquée avec l'ensemble des interconnexions entre la surface externe qui reçoit les métallisations et qui est située à la partie supérieure et la surface externe qui reçoit l'électronique de traitement représentée à la partie inférieure, cette électronique étant également sous boîtier hermétique. Après cuisson, la céramique 95 est rectifiée ce qui lui confère les qualités géométriques compatibles avec la précision demandée. La structure ainsi obtenue est ensuite métallisée puis gravée. On obtient ainsi des interconnexions collectives entre la gravure stator et le substrat d'où un coût de réalisation moins élevé et un gain en fiabilité. La gravure est référencée par rapport à une structure géométriquement très précise d'où un gain en précision. Cette méthode est également applicable à la réalisation de la partie mobile non figurée sur ce schéma partiel.

9

## Revendications

1. Capteur de position angulaire ou linéaire, de haute précision, à couplage capacitif comportant:

dans un premier plan, (1), une première série de $n$ électrodes (S1 à Sn) réparties régulièrement à un pas P1 déterminé selon une direction donnée (DR) pour couvrir une plage de déplacement d'étendue n P1, lesdites électrodes étant alimentées par des tensions polyphasées pour créer un champ électrique mobile selon ladite direction et parcourant périodiquement ladite plage de déplacement, et une électrode collectrice de lecture (SC),

dans un deuxième plan (2), parallèle au premier plan et disposé à proximité de celui-ci, un dispositif conducteur électrique déplaçable selon ladite direction et couvrant une partie de ladite plage pour produire, par couplage capacitif avec lesdites électrodes et avec l'électrode collectrice une tension induite dans cette dernière dont la phase est une fonction linéaire de la position dudit dispositif conducteur dans la plage de déplacement, et des circuits de traitement (7) de la tension induite pour mesurer la phase et corrélativement la position du conducteur mobile, et dans lequel le dispositif conducteur électrique est constitué au moyen, d'une part, d'une deuxième série d'électrodes (RP) en nombre $m$ inférieur à $n$ et qui sont disposées régulièrement à un pas P2 supérieur à P1, et d'autre part d'une électrode (RC) de couplage capacitif à l'électrode collectrice (SC), les électrodes de la deuxième série étant connectées à cette électrode de couplage, le capteur étant caractérisé en ce que les circuits de traitement (7) procèdent par intégration périodique de la tension induite à la période de déplacement du champ, et par détermination par rapport à un instant de référence (to) du décalage présenté par l'instant (to+$\tau$) qui satisfait à la valeur moitié de l'intégration, ledit instant de référence correspondant à une position de référence du dispositif conducteur dans ladite plage.

2. Capteur selon la revendication 1, caractérisé en ce que les électrodes de la deuxième série ont les mêmes dimensions (L1) que celles de la première série, les paramètres $m$ et P2 étant en outre choisis de manière à produire un couplage capacitif qui varie linéairement avec le décalage angulaire.

3. Capteur selon la revendication 2, caractérisé en ce que lesdits paramètres sont choisis de manière à ce que la deuxième série d'électrodes couvre au moins la surface d'une électrode (Sj) de la première série, quelle que soit la position du dispositif conducteur dans ladite plage.

4. Capteur selon la revendication 2 ou 3, caractérisé en ce que lesdites électrodes (SP, RP) sont rectangulaires, de même largeur (L1) selon la direction (DR) de déplacement, le nombre $m$ est choisi égal à 3 et le pas P2 égal à 1,5 P1.

5. Capteur selon l'une quelconque des revendications 1 à 4, caractérisé en ce que les circuits de traitement (7) comportent des moyens d'intégration (12, 13) pour intégrer le signal induit dans ladite électrode collectrice respectivement au cours d'un premier signal de porte (SP1) puis au cours d'un deuxième signal de porte (SP2), lesdits circuits intégrés étant insérés dans une boucle d'asservissement d'un circuit générateur (14) desdits signaux de porte, en sorte que la transition des signaux de porte viennent se caler à l'instant correspondant à la valeur moitié de la valeur totale d'intégration, ladite transition correspondant au front arrière du premier signal de porte et au front avant du deuxième signal de porte.

6. Capteur selon la revendication 5, caractérisé en ce que les moyens d'intégration sont réalisés avec un circuit analogique démodulateur (34) utilisant un oscillateur contrôlé par tension, la tension d'erreur étant délivrée sous forme d'une variation de fréquence qui est appliquée à un ensemble de circuits logiques (71, 710) avec des circuits compteur-décompteur (27—29, 97—98—99) pour être fournie en numérique (VS NUM.).

7. Capteur selon l'une quelconque des revendications 1 a 6, caractérisé en ce que le premier plan (1) comporte une troisième série (SPV) de $n$ électrodes identiques à la première série d'électrodes (SPG) et disposée parallèlement à celles-ci et à la direction (DR) de deplacement, ainsi qu'une deuxieme electrode collectrice (SCV) de lecture associée à cette troisième série d'électrodes, ledit deuxième plan comportant une quatrieme serie d'electrodes (RPV) reproduisant ladite deuxième série d'électrodes (RPG) séquentiellement à un pas déterminé ($2\pi/2^{N-3}$ ou $L/2^{N-3}$, avec n = $2^N$) de manière à obtenir un nombre N déterminé de groupements le long de ladite plage de déplacement, ladite quatrième série d'électrodes (RPV) étant couplée par ledit champ avec ladite troisième série d'électrodes (SPV) pour constituer un vernier de lecture, la deuxième série d'électrodes (RPG) et la première série (SPG) permettant d'établir une mesure grosse.

8. Capteur selon la revendication 7, caractérisé en ce qu'il est formé selon une structure périodique, ladite première (SPG) et troisième (SPV) séries d'électrodes portées par le premier plan étant formé de $2^{N2}$ groupement successif comportant $2^{N1}$ électrodes par groupement de manière à n'utiliser que $2^{N1}$ tensions polyphasées pour alimenter lesdits groupements en parallèle, le nombre global d'électrodes de ladite première ou troisième série étant égal à $2^{N1+|N2}$ lesdites deuxième (RPG) et quatrième (RPV) séries d'électrodes dans le deuxième plan étant également réparties selon $2^{N2}$ groupements à un pas égal à $2\pi/2^{N1+N-2}$ ou $L/2^{N1+N-2}$ pour la piste vernier correspondant à ladite quatrième série (RPV) et selon que le capteur est rotatif ou linéaire, et les électrodes de la deuxième série (RPG) correspondant à la piste grosse étant à un pas $2\pi/2^{N2}$ pour un capteur rotatif et $L/2^{N2}$ pour un capteur linéaire, des moyens de levée d'ambiguïté étant prévus pour identifier le seteur concerné par la mesure, ces dits moyens d'ambiguïté comportant sur le premier plan une piste (SPA) de $2^{N2}$ éléments et une électrode collectrice de lecture (SCA) et sur le deuxième plan une piste de couplage (RCA) à ladite électrode de lecture et qui est connectée à une piste (LRA) formée par un curseur.

9. Capteur selon la revendication 8, caractérisé en ce que les coefficients N1 et N2 sont choisis égal à 4 de manière à produire 16 tensions polyphasées d'alimentation pour un nombre global de 256 électrodes sur les pistes du premier plan formant ladite première et troisième séries d'électrodes, ledit capteur fournissant une précision de 16 bits.

10. Capteur selon l'une quelconque des revendications précédentes, caractérisé en ce qu'il comporte en outre des anneaux de garde (SAG, RAG) avec des prolongations latérales de part et d'autre de chacune des électrodes desdites séries d'électrodes.

11. Capteur selon l'une quelconque des revendications précédentes, caractérisé en ce que lesdits premier et deuxième plans sont constitués chacun par une plaque en matériau diélectrique, lesdites électrodes étant obtenues sous forme de métallisations sur une face de chaque plaque.

12. Capteur selon la revendication 11, caractérisé en ce que ledit premier plan correspond au stator et le deuxième plan au rotor dans la réalisation sous forme d'un capteur rotatif, ledit deuxième plan correspondant à un curseur dans une réalisation linéaire.

13. Capteur selon la revendication 11 ou 12, caractérisé en ce que ledit matériau diélectrique est à base de verre ou de silicium.

14. Capteur selon la revendication 11 ou 12, caractérisé en ce que ledit matériau diélectrique est formé à base d'une céramique multicouche cocuite (10, 20, 95), chaque plaque comportant, sur une surface extérieure les métallisations constituant lesdites électrodes, sur l'autre surface extérieure les circuits de traitement et d'alimentation polyphasée, ces circuits étant placés sous boîtier étanche (73, 74).

**Patentansprüche**

1. Hochpräziser Aufnehmer zur Erfassung einer linearen oder einer Winkelposition mit kapazitiver Kopplung, der in einer ersten Ebene (1) aufweist:
eine erste Serie von n Elektroden (S1 bis Sn), die entlang einer gegebenen Richtung (DR) regelmäßig mit einem bestimmten Abstand P1 zur Abdeckung eines Verstellbereichs mit der Ausdehnung n.P1 verteilt sind, wobei die Elektroden durch Mehrphasenspannungen zur Erzeugung eines in der genannten Richtung beweglichen und den Verstellbetrieb periodisch durchlaufenden elektrischen Felds versorgt werden, und eine Sammel-Leseelektrode (SC),
und der in einer zweiten Ebene (2) parallel zur ersten Ebene (2) und dieser benachbart aufweist: eine elektrisch leitende Vorrichtung, die in der genannten Richtung verstellbar ist und einen Teil des Meßbereichs bedeckt, und die durch kapazitive Kopplung mit den Einzelelektroden und mit der Sammelelektrode eine in dieser induzierte Spannung erzeugt, deren Phase eine lineare Funktion der Position der leitenden Vorichtung innerhalb des Verstellbereichs ist,
und Verarbeitungskreise (7) für die induzierte Spannung zur Messung der Phase und dementsprechend der Position der verstellbaren leitenden Vorrichtung, wobei die elektrisch leitende Vorrichtung zum einen aus einer zweiten Serie von Elektroden (RP), deren Anzahl m kleiner als n ist und die regelmäßige Abstände P2 größer als P1 besitzen, und zum anderen aus einer kapazitiven Koppelelektrode (RC) zur Kopplung an die Sammelelektrode (SC) aufgebaut ist und wobei die Elektroden der zweiten Serie an diese Koppelelektrode angeschlossen sind, dadurch gekennzeichnet, daß die Verarbeitungskreise (7) eine periodische Integration der mit der periode der Feldverschiebung induzierten Spannung und eine Bestimmung der zum dem halben Integrationswert entsprechenden Zeitpunkt (to+) relativ zu einem Bezugszeitpunkt (to) erfolgten Verschiebung durchführen, wobei der Bezugszeitpunkt einer Bezugsposition der leitenden Vorrichtung innerhalb des Meßbereichs entspricht.

2. Aufnehmer nach Anspruch 1, dadurch gekennzeichnet, daß die Elektroden der zweiten Serie die gleichen Abmessungen (L1) besitzen wie diejenigen der ersten Serie, wobei die Parameter m und P2 weiter derart gewählt werden, daß eine kapazitive Kopplung herbeigeführt wird, die sich linear mit der Winkelverstellung verändert.

3. Aufnehmer nach Anspruch 2, dadurch gekennzeichnet, daß die Parameter so gewählt sind, daß die zweite Serie von Elektroden mindestens die Oberfläche einer Elektrode (Sj) der ersten Serie überdeckt, und zwar in jeder Position der leitenden Vorrichtung im Meßbereich.

4. Aufnehmer nach Anspruch 2 oder 3, dadurch gekennzeichnet, daß die Elektroden (SP, RP) rechteckig sind und die gleiche Breite (L1) in der Verstellrichtung (DR) besitzen und daß die Anzahl m mit 3 und der Abstand P2 mit 1,5 P1 festgelegt sind.

5. Aufnehmer nach einem beliebigen Anspruch 1 bis 4, dadurch gekennzeichnet, daß die Verarbeitungskreise (7) Integrationsmittel (12, 13) zum Integrieren des in der Sammelelektrode induzierten Signals jeweils im Verlauf eines ersten Torsignals (SP1) und dann im Verlauf eines zweiten Torsignals (SP2), wobei die beiden Integrationskreise in eine Regelschleife eines Erzeugungskreises (14) für die Torsignale eingeschaltet sind, derart, daß der Übergang der Torsignale in einem Zeitpunkt erfolgt, der dem halben Wert des gesamten Integrationswerts entspricht, wobei der Übergang der Rückflanke des ersten Torsignals und der Vorderflanke des zweiten Torsignals entspricht.

6. Aufnehmer nach Anspruch 5, dadurch gekennzeichnet, daß die Integrationsmittel mit einem analogen Demodulationskreis (34) und einem spannungsgesteuerten Oszillator gebildet sind, wobei die Fehlerspannung in Form einer Frequenzänderung geliefert wird, die an eine Gruppe von Logikkreisen (71, 710) mit Aufwärts-Abwärtszählkreisen (27—29, 97—98—99) und somit in numerischer Form (VSNUM) vorliegt.

7 Aufnehmer nach einem beliebigen Anspruch 1 bis 6, dadurch gekennzeichnet, daß die erste Ebene (1) eine dritte Serie (SPV) von n Elektroden, die denjenigen der ersten Serie (SPG) von Elektroden entsprechen und parallel zu diesen und zur Verstellrichtung (DR) angeordnet sind, sowie eine eine zweite Sammel-Leseelektrode (SCV) aufweist, die der dritten Serie von Elektroden zugeordnet ist, und daß die zweite Ebene eine vierte Serie von Elektroden (RPV) aufweist, die die zweite Serie (RPG) von Elektroden in der Abfolge mit einem bestimmten Abstand ($2\pi/2^{N-3}$ oder $L/2^{N-3}$ mit $n = 2^N$) reproduziert, derart, daß eine bestimmte Anzahl von N Gruppierungen entlang des Verstellbereichs erhalten wird, wobei die vierte Serie (RPV) von Elektroden durch das Feld mit der dritten Serie (SPV) von Elektroden gekoppelt ist, um ein Lesenonius zu bilden, während die zweite Serie (RPG) von Elektroden und die erste Serie (SPG) eine grobe Messung ermöglichen.

8. Aufnehmer nach Anspruch 7, dadurch gekennzeichnet, daß er entsprechend einer periodischen Struktur aufgebaut ist, wobei die erste Serie (SPG) und die dritte Serie (SPV) von Elektroden auf der ersten Ebene aus $2^{N_2}$ aufeinanderfolgenden Gruppierungen mit $2^{N_1}$ Elektroden je Gruppe bestehen, derart, daß nur $2^{N_1}$ Mehrphasenspannungen zu parallelen Versorgung der Gruppierungen verwendet werden, wobei die Gesamtanzahl der Elektroden der ersten oder der dritten Serie $2^{N_1+N_2}$ beträgt, und daß die zweite Serie (RPG) und die vierte Serie (RPV) von Elektroden auf der zweiten Ebene ebenfalls in $2^{N_2}$ Gruppierungen mit einem Absatand von $2\pi/2^{N_1 N_2-2}$ oder $L/2^{N_1+N_2-2}$ für die der vierten Serie (RPV) entsprechenden Noniusspur, je nachdem, ob der Aufnehmer ein Winkel- oder Linearaufnehmer ist, unterteilt ist, und daß die der groben Spur entsprechenden Elektroden der zweiten Serie (RPG) im Fall eines Winkelaufnehmers einen Abstand von $2\pi/2^{N_2}$ und im Fall eines linearen Aufnehmers einen Abstand von $N/N^2$ aufweisen, wobei Mittel zur Beseitigung von Zweideutigkeiten zur Identifizierung des von der Messung betroffenen Abschnitts vorgesehen sind und diese "Zweideutigkeitsmittel" in der ersten Ebene eine Spur (SPA) mit $2^{N_2}$ Elementen sowie eine Sammel-Leseelektrode (SCA) und in der zweiten Ebene eine Koppelspur (RCA) zur Leseelektrode aufweisen, die an eine durch einen Kursor gebildete Spur (LRA) angeschlossen ist.

9. Aufnehmer nach Anspruch 8, dadurch gekennzeichnet, daß die Koeffizienten N1 und 2 der Zahl 4 entsprechen, so daß 16 Mehrphasenversorgungsspannungen für eine Gesamtzahl von 256 Elektroden auf den Spuren der ersten, die erste und die dritte Serie von Elektroden bildende Ebene erzeugt werden, wobei der Aufnehmer eine Genauigkeit von 16 Bits bietet.

10. Aufnehmer nach einem beliebigen der vorhergehenden Ansprüche, dadurch gekennzeichnet, daß er weiter Schutzringe (SAG, RAG) mit seitlichen Verlängerungen zu beiden Seiten jeder Elektrode der Elektrodenserien aufweist.

11. Aufnehmer nach einem beliebigen der vorhergehenden Anspspruche, dadurch gekennzeichnet, daß die erste und die zweite Ebene jeweils aus einer Platte aus dielektrischem Material bestehen, wobei die Elektroden in Form von Metallisierungen auf einer Fläche jeder Platte gebildet sind.

12. Aufnehmer nach Anspruch 11, dadurch gekennzeichnet, daß im Falle seiner Verkörperung als Winkelaufnehmer die erste Ebene dem Stator und die zweite Ebene dem Rotor entspricht, während im Fall der linearen Ausführung die zweite Ebene einem Kursor entspricht.

13. Aufnehmer nach Anspruch 11 oder 12, dadurch gekennzeichnet, daß das dielektrische Material Glas oder Silizium als Basis hat.

14. Aufnehmer nach Anspruch 11 oder 12, dadurch gekennzeichnet, daß das dielektrische Material auf der Basis einer zusammengesinterten Mehrschicht-Keramik (10, 20, 95) hergestellt ist, wobei jede platte auf einer der äußeren Seiten die die Elektroden bildenden Metallisierungen und auf der anderen äußeren Seite die Verarbeitungs- und die Mehrphasenversorgungskreise aufweist und diese Kreise in einem dichten Gehäuse (73, 74) untergebracht sind.

## Claims

1. An angular or linear high precision sensor of the capacitive coupling type, comprising:
in a first plane (1):
a first series of n electrodes (S1 to Sn) regularly spaced out at a determined pitch (P1) along a given direction (DR) in order to cover a range of displacement extending over a distance of n.P1, said electrodes being fed by polyphase voltages adapted to generate an electric field, which is movable in said direction and passes periodically through said range of displacement, and a collector read electrode (SC),
in a second plane (2) parallel to the first plane and disposed close thereto:
an electrically conducting device displaceable in said direction and covering part of said range in order to generate by means of a capacitive coupling with said electrodes and with the collector electrode a voltage induced into the latter whose phase is a linear function of the position of said conducting device within the range of displacement, and circuits (7) for processing the induced voltage in order to measure the phase and correlatively the position of the movable conducting device, and in which the electrically conducting device is constituted by a second series (RP) of electrodes totalling a number of m smaller than n and being spaced out regularly at a pitch P2 greater than P1, on the one hand, and by a capacitive coupling electrode (RC) coupled to the collector electrode (SC), on the other hand, the electrodes of the second series being connected to said coupling electrode, characterized in that the processing circuits (7) operate by way of periodic integration of the induced voltage in synchronism with the displacement period of the field and by determination of the shift presented at the instant (to +), with respect to the reference instant (to) satisfying half of the integration value, said reference instant corresponding to a reference position of the conducting device within said range.

2. A sensor according to claim 1, characterized in that the electrodes of the second series have the same size (L1) as those of the first series, the parameters m and P2 being further chosen in such a manner as to produce a capacitive coupling which varies linearily with the angular shift.

3. A sensor according to claim 2, characterized in that said parameters are chosen in such a manner that the electrodes of the second series cover at least the surface of one electrode (Sj) of the first series, regardless of the position of the conducting device within said range.

4. A sensor according to claim 2 or 3, characterized in that said electrodes (SP, RP) are rectangular in shape, having the same width (L1) in the direction of displacement (DR), with the number m being equal to 3 and the pitch P2 being equal to 1,5 P1.

5. A sensor according to any one of claims 1 to 4, characterized in that the processing circuits (7) comprise integration means (12, 13) for integrating the induced signal in said, collector electrode respectively during a first gate signal (SP1) and then during a second gate signal (SP2), said integration circuits being placed in a feed-back loop of a generator circuit (14) for generating said gate signals such that the transition of the gate signals is synchronized to the instant corresponding to half of the value of the total integration value, said transition corresponding to the falling edge of the first gate signal and to the raising edge of the second gate signal.

6. A sensor according to claim 5, characterized in that the integration means are constituted by means of a demodulating analog circuit (34), using a voltage controlled oscillator, the error voltage being provided in the form of a frequency variation, which is applied to an assembly of logic circuits. (71, 710) having incrementing-decrementing counting circuits (27—29, 97—98—99) so that the error voltage is delivered in numerical form (VS NUM).

7. A sensor according to any one of claims 1 to 6, characterized in that the first plane (1) comprises a third series (SPV) of n electrodes identical to the first series of electrodes (SPG) and disposed parallel to the latter and to the direction (DR) of displacement, as well as a second collector read electrode (SCV) associated with said third series of electrodes, said second plane comprising a fourth series of electrodes (RVP) adapted to reproduce said second series of electrodes (RPG) sequentially at a predetermined pitch ($2\pi/2^{N-3}$ or $L/2^{N-3}$ with $n = 2^N$), such that a predetermined number $n$ of groupings along said range of displacement is obtained, said fourth series of electrodes (RPV) being coupled through said field with said third series of electrodes (SPV) in order to constitute a read vernier, the second series of electrodes (RPG) and the first series (SPG) allowing to establish a coarse measurement.

8. A sensor according to claim 7, characterized in that it is built up on a periodic structure, said first (SPG) and third (SPV) series of electrodes carried by the first plane being constituted of $2^{N2}$ successive groupings comprising $2^{N1}$ electrodes per grouping, so as to use only $2^{N1}$ polyphase voltages for feeding said groupings in parallel, the global number of electrodes of the first or third series being equal to $2^{N1+N2}$ said second (RPG) and fourth (RPV) series of electrodes in the second plane being also subdivided into $2^{N2}$ grouping at a pitch equal to $2\pi/2^{N1+N2-2}$ or $L/2^{N1+N2-2}$ for the vernier track corresponding to said fourth series (RPV) and depending upon whether the sensor is of the rotary or of the linear type, and the electrodes of the second series (RPG) corresponding to the coarse track having a pitch of $2\tau/2^{N2}$ for a rotary sensor and $L/2^{N2}$ for a linear sensor, ambiguity eliminating means being provided for identifying the sector concerned by the measurement, said means referred to as ambiguity means comprising a track (SPA) of $2^{N2}$ elements and a collector read electrode (SCA) on the first plane, and a coupling track (RCA) ensuring the coupling to said read electrode on the second plane, with said latter track being connected to a track (LRA) formed by a cursor.

9. A sensor according to claim 8, characterized in that the coefficients $N^1$ and $N^2$ are chosen to be equal to 4, so as to generate 16 polyphase feed voltages for serving a global number of 256 electrodes on the tracks of the first plane forming said first and third series of electrodes, said sensor supplying a 16 bits accuracy.

10. A sensor according to any one of the preceding claims, characterized in that, in addition, it comprises safeguard rings (SAG, RAG) having lateral extension, which are placed on both sides of each of the electrodes of said series of elecd tro es.

11. A sensor according to any one of the preceding claims, characterized in that said first and second planes are constituted each of a plate of dielectric material, said electrodes being constituted by metallizations on one face of each plate.

12. A sensor according to claim 11, characterized in that said first plane corresponds to the stator and the second plane to the rotor in an embodiment taking the shape of a rotary sensor, whereas said second plane corresponds to a cursor in a linear embodiment.

13. A sensor according to claim 11 or 12, characterized in that said dielectric material is based on glass or silicon.

14. A sensor according to claim 11 or 12, characterized in that said dielectric material is based on a co-sintered multilayer ceramic material (10, 20, 95), with each plate comprising on one external surface thereof the metallizations constituting said electrodes, and on the other external surface thereof the processing and polyphase feed circuits, said circuits being enclosed in a tight casing (73, 74).

# FIG_1

A sin(ωt + R₁ⁿ 2π/n)

GENERATEUR U POLYPHASEES

OSCILLATEUR

sin ωt

H

VR

GENERATEUR SIGNAUX Cde

∫ 12

∫ 13

SP1

SP2

RAZ

H

Ve

VCO

C/D

VR

Vs

θ NUM

# FIG_2

Coupe XZ

FIG_3

FIG_4

FIG_5

EP 0 270 440 B1

FIG_6

FIG_6A

FIG_8

FIG_7

EP 0 270 440 B1

# FIG_9

# FIG_10

# FIG_11

FIG_12

EP 0 270 440 B1

## FIG_13

## FIG_17

FIG_14

EP 0 270 440 B1

SECTEUR N  SECTEUR N+1

SPV OU SPG

S1 S2 S3 S4  S16  S1 S2  S16

$2T/2^{N1+N2}$ ou $L/2^{N1+N2}$  $a = \pi/2^{N1+N2}$ ou $\frac{L}{2}/2^{N1+N2}$

RPV

POS A $\begin{cases} \theta_A = Ka \\ L_A = Kq \end{cases}$

POS B $\begin{cases} \theta_B = \theta_A + \frac{a}{2} \\ L_B = \theta_A + \frac{a}{2} \end{cases}$

POS C $\begin{cases} \theta_C = \theta_A + a \\ L_C = \theta_A + a \end{cases}$

POS D $\begin{cases} \theta_D = \theta_A + \frac{3}{2}a \\ L_D = \theta_A + \frac{3}{2}a \end{cases}$

POS E $\begin{cases} \theta_E = \theta_A + 2a \\ L_E = \theta_A + 2a \end{cases}$

$T/2^{N1}$

S1  S2  S3  S4  $t$

POS A

SP1  SP2

$\tau_B = T/4/2^{N1} = K1(\theta_B - \theta_A)$ ou $K_2(L_B - L_A)$

POS B

$\tau_C = T/2/2^{N1} = K1(\theta_C - \theta_A)$ ou $K_2(L_C - L_A)$

POS C

$\tau_D = 3T/4/2^{N1} = K_1(\theta_D - \theta_A)$ ou $K_2(L_D - L_A)$

POS D

$\tau_E = T/2^{N1} = K_1(\theta_E - \theta_A)$ ou $K_2(L_E - L_A)$

POS E

FIG_15

# FIG_16

SPV ou
SPG

SECTEUR N° →   1   2   3   4   5   6   7   8   9   10   11   12   13   14   15   16

bit - B5 →
bit - B4 →

SPA   P   A   B   C   D   E   F   G   H   I   J   K   L   M   N   O   P

bit - B3 →
, B2 →
, B1 →
, B0 →

EP 0 270 440 B1